# EUROPÄISCHE PATENTANMELDUNG

(11) **EP 1 440 861 A1**
(43) Veröffentlichungstag der Anmeldung: **28.07.2004**
(21) Anmeldenummer: 03090423.9
(22) Anmeldetag: 04.12.2003
(51) Int. Cl.: B61L 1/16, G01S 13/04

(54) **Sensor für Schienenfahrzeugräder**

(30) Priorität: 22.01.2003 DE 10302856
(71) Anmelder: SIEMENS AKTIENGESELLSCHAFT, 80333 München (DE)
(72) Erfinder: Kakuschke, Chris, 12435 Berlin (DE); Lude, Gerald, 10585 Berlin (DE); Richter, Olaf, 13591 Berlin (DE)

(57) **Zusammenfassung**

Die Erfindung betrifft einen Radsensor, insbesondere für eine Gleisfreimeldeanlage, mit mindestens einen gleisseitigen Sensor zur Erfassung das Gleis (6) überfahrender Räder (5) eines Schienenfahrzeuges. Um den Einfluss von Störmagnetfeldern zu verringern, ist vorgesehen, dass der Sensor als Mikrowellensensor ausgebildet ist.

## Beschreibung

Die Erfindung betrifft einen Radsensor gemäß dem Oberbegriff des Anspruchs 1. Radsensoren werden im Bahnwesen für die Gleisfreimeldung, aber auch für andere Schalt- und Meldeaufgaben eingesetzt. Dabei wird überwiegend die magnetfeldbeeinflussende Wirkung der Eisenräder der Schienfahrzeuge ausgenutzt. Mittels am Gleiskörper angebrachter induktiver Sensoren, die ein spezifisches Magnetfeld erzeugen, lässt sich die Rückwirkung der Eisenräder erfassen, wobei mit jeder Raderfassung bzw. Achsenerfassung ein Radimpuls registriert wird. Die Anzahl der Radimpulse gibt im Zusammenwirken mit einem weiteren Radsensor Auskunft über den Belegungszustand des dazwischenliegenden Gleisabschnittes. Diese Gleisfreimeldung stellt ein wesentliches Entscheidungskriterium für die Steuerung von Weichen und Signalen dar. Anhand des Belegungszustandes von Gleisabschnitten wird die Entscheidung getroffen, ob ein Schienenfahrzeug in diesem Gleisabschnitt einfahren darf oder nicht. Folglich müssen die Meldesignale der Achszähler extrem hohen Zuverlässigkeitsanforderungen genügen. Es ist sicherzustellen, dass nur die die Sensoren überfahrenden Eisenräder der Schienenfahrzeuge von den Sensoren erfasst werden und Störmagnetfelder anderer Herkunft ignoriert werden. Derartige Störmagnetfelder sind beispielsweise Magnetfelder, die bei elektrischer Traktion durch Schienenströme und durch Fahrzeugkomponenten wie Transformatoren, Drosseln und elektrische Schienenbremsen entstehen. Letztere stellen ein besonderes Problem dar, da die erzeugten Magnetfelder sehr stark sind. Das betrifft insbesondere die für den ICE (Intercity Express) entwickelte Wirbelstrombremse, welche in erregtem Zustand ein Störmagnetfeld erzeugt, das das Arbeitsmagnetfeld des induktiven Sensors sehr stark überlagert. Ein Lösungsansatz basiert auf Kompensationsbestrebungen derart, dass das Störmagnetfeld durch Aufbau eines gegensinnigen Feldes quasi neutralisiert wird. Dazu ist eine spezielle Spulenanordnung mit einem magnetischen Kern vorgesehen. Problematisch bei diesem Lösungsansatz ist jedoch, dass ein sehr starkes Störmagnetfeld, beispielsweise das einer erregten Wirbelstrombremse den Spulenkern so magnetisieren kann, dass ein unerwünschtes Ansprechen des Sensors verursacht wird.

Der Erfindung liegt die Aufgabe zugrunde, diese Nachteile zu beseitigen und einen Radsensor der gattungsgemäßen Art anzugeben, der hinsichtlich der Empfindlichkeit und der Zuverlässigkeit optimiert ist.

Erfindungsgemäß wird die Aufgabe durch die kennzeichnenden Merkmale des Anspruchs 1 gelöst. Durch die Verwendung eines Mikrowellensensors ergibt sich eine weitgehende Unabhängigkeit von Störmagnetfeldern jeglicher Art. Bekannt ist die Anwendung der Mikrowellensensorik zur Objekterkennung im Fernfeld. Im Gegensatz zur Fernfelderkennung beträgt bei der Achszählung der Abstand zwischen dem Sensor und dem zu erkennenden Objekt, nämlich dem Rad, nur wenige Zentimeter. In diesem Bereich befinden sich keine anderen Zugunterbauten, deren Reflektion bzw. Extinktion nur mit hohem Aufwand von dem Rad eines Schienenfahrzeugs unterscheidbar wären. Als Detektionsobjekt bietet sich insbesondere der Spurkranz des Rades an, welcher auf der Innenseite der Schienen bis einige Zentimeter unterhalb des Schienenkopfes vorragt. Für bahntechnische Anwendungen ist das elektromagnetische Frequenzband der momentan kommerziell nutzbaren Mikrowellen zwischen ca. 0.5 GHz und etwa 50 GHz besonders vorteilhaft, da die bahntypischen Störmagnetfelder hier weitgehend ohne Folgen bleiben. Neben der hohen Resistenz der Mikrowellensensorik gegen Störmagnetfelder besteht ein weiterer Vorteil gegenüber bekannten Magnetfeldsensoren in den erheblich geringeren Bauteilekosten.

Gemäß Anspruch 2 ist für den Mikrowellensensor ein Transceiver/Hohlleiter-Aufbau vorgesehen, wobei die Austrittsöffnung des Hohlleiters möglichst nahe an den Schienenkopf heranreicht. Eine Antenne im herkömmlichen Sinne ist nicht erforderlich, da die Feldstärke auf das Nahfeld konzentriert bleiben soll. Tritt der metallische Spurkreis des Rades in diesen Bereich ein, ändern sich schlagartig die Reflektions- und Resonanzverhältnisse im System und je nach Abstimmung steigt oder sinkt die Spannung am Mischerausgang des Mikrowellentransceivers signifikant. Für die Abschirmung der Sende-/Empfangselektronik des Transceivers wird das Hohlleiterprinzip genutzt, welches das Eindringen von elektromagnetischen Wechselfeldern unterhalb der verwendeten Mikrowellenfrequenz weitgehend verhindert.

Durch den Einsatz eines Transceivers mit analytischem Signalausgang gemäß Anspruch 3 ist mit der Auswertung der Phasendrehung zwischen den Quadraturkomponenten eine noch robustere intensitäts- und driftunabhängige Auswertung möglich.

Eine besonders vorteilhafte, in Anspruch 4 gekennzeichnete Ausführungsform besteht darin, dass sowohl der Transceiver als auch die wenige zusätzlich notwendige Auswerteelektronik im Innern eines Gussgehäuses mit guten Abschirmeigenschaften untergebracht werden können. Der Hohlleiter kann beim Formgebungsprozess mit eingearbeitet werden.

Nachfolgend wird die Erfindung anhand eines figürlich dargestellten Ausführungsbeispiels näher erläutert.

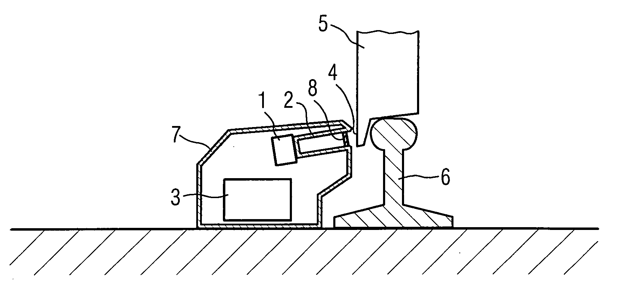

Die einzige Figur zeigt den prinzipiellen Aufbau eines Mikrowellensensors im Verhältnis zu Rad und Schiene.

Ein Mikrowellensensor besteht im Wesentlichen aus einem Transceiver 1, der mit einem Hohlleiter 2 zusammenwirkt, und einer Auswerteelektronik 3, die ein Ausgangssignal erzeugt, wenn ein Objekt das durch den Transceiver 1 erzeugte Nahfeld beeinflusst. Das Objekt ist der Spurkranz 4 eines Rades 5 eines nicht weiter dargestellten Schienenfahrzeuges, das ein Gleis 6 überfährt. Der Mikrowellensensor ist von einem Gusskörper 7 umschlossen, der eine Ausformung aufweist, welche den Hohlleiter bildet. Die Austrittsöffnung des metallischen Hohlleiters 2 ist mit einem Kunststofffenster 8 verschlossen. Störmagnetfelder, die das Nahfeld des Mikrowellensensors überlagern, werden ausgeblendet, da deren Frequenzen wesentlich unterhalb des Mikrowellenfrequenzbandes liegen.

Die Erfindung beschränkt sich nicht auf das vorstehend angegebene Ausführungsbeispiel. Vielmehr ist eine Anzahl von Varianten denkbar, welche auch bei grundsätzlich anders gearteter Ausführung von den Merkmalen der Erfindung Gebrauch machen.

## Patentansprüche

1. Radsensor, insbesondere für eine Gleisfreimeldeanlage, mit mindestens einem gleisseitigen Sensor zur Erfassung das Gleis (6) überfahrender Räder (5) eines Schienefahrzeuges,
**dadurch gekennzeichnet,**
**dass** der Sensor als Mikrowellensensor ausgebildet ist.

2. Radsensor nach Anspruch 1,
**dadurch gekennzeichnet,**
**dass** der Mikrowellensensor einen Transceiver (1) aufweist, der mit einem Hohlleiter (2) zusammenwirkt, wobei die Austrittsöffnung des Hohlleiters (2) wenige Zentimeter von dem Schienenkopf beabstandet angeordnet ist.

3. Radsensor nach einem der vorangehenden Ansprüche,
**dadurch gekennzeichnet,**
**dass** der Transceiver (1) einen analytischen Signalausgang zur Auswertung der Phasendrehung zwischen den Quadraturkomponenten aufweist.

4. Radsensor nach einem der vorangehenden Ansprüche,
**dadurch gekennzeichnet,**
**dass** ein Gussgehäuse mit einer den Hohlleiter (2) bildenden Ausformung vorgesehen ist, in dessen Innern der Transceiver (1) und mit diesem verbundene Auswerteelektronik (3) angeordnet sind.
